# EUROPEAN PATENT APPLICATION

(11) **EP 3 034 570 A1**
(43) Date of publication of application: **22.06.2016**
(21) Application number: 15200270.5
(22) Date of filing: 15.12.2015
(51) Int. Cl.: C09D 5/00

(54) **METHOD FOR THE IMPLEMENTATION OF A COATING FOR BASES UNDER THE INCIDENCE OF ENERGY IN THE SPECTRUM OF 10-7 < ? < 10-4 M. AND COATING OBTAINED BY SAID METHOD**

(30) Priority: 18.12.2014 ES 201431863
(71) Applicant: Arraela, S.L., 15621 Coruña (ES)
(72) Inventor: CARUNCHO RODADO, Juan Manuel, 15621 LA CORUÑA (ES)
(74) Representative: Del Valle Valiente, Sonia

(57) **Abstract**

A method for making a coating for bases under the incidence of energy in the wavelength spectrum of 10⁻⁷ < λ < 10⁻⁴ m., which comprises applying a metal oxide mixture on the base by prior dissolution in a solvent, with subsequent cooking and controlled cooling. The invention also includes the coating obtained by said method

## Description

### OBJECT OF THE INVENTION

The present invention refers to a method for making a new coating for bases under the incidence of energy in the wavelength spectrum of 10⁻⁷< λ <10⁻⁴ m. basically, and to the coating obtained by said method. This coating is capable of handling in different ways the energy transported by incident light onto the base, either looking for high absorptivity to increase accumulation as heat on the base, or alternatively looking for a high emissivity for the dispersion and effective insulation and protection of the base. The coating has high thermal stability and is intended preferably to be applied on bases of materials with high thermal impedance.

### TECHNICAL FIELD

The present invention relates generally to the field of building materials, and more specifically to chemical physical coatings for energy use and application.

### BACKGROUND OF THE INVENTION

In a central receiver solar thermal power plant, the solar radiation meets a field of heliostats that are positioned so that the incident radiation is reflected onto the central receiver. This receiver has to be designed so that it is capable of producing a temperature differential in the heat transfer fluid (HTF) from its interior, based fundamentally on having a good capacity to capture the heat energy contained in the spectrum of 10⁻⁷ < λ < 10 ⁻⁴ m. fundamentally, and contained in the incident solar radiation.

Moreover, a small part of the radiation leaves the geometric area of the solar collector directly meeting the tower structure. This radiation is "unwanted" or detrimental to the structure, and if it is concrete, for example, it may start dehydrating, and consequently gradually lose its mechanical properties. To this end, the protection of these areas with panels of high thermal impedance materials such as HEATEK® Ai makes sense, being able to have the bases formed by these coated panels of high emissivity increase the dispersion of incident energy and protect the panel. In addition, a sufficient mechanical strength is also sought at high temperatures, as these elements may suffer severe impacts of hail, etc.

Moreover, in most industrial processes, a large amount of thermal energy is lost in different parts of the production line, either through loss in furnaces or evaporators, chimneys, etc. In these cases a good design of materials and systems, supported by an appropriate combination of insulating coatings, can lead to energy recovery systems.

In these cases, the energy can be captured and stored in storage materials such as HEATEK® Ac and even transported as a "thermal battery", and later, this stored thermal energy can be used in another process (such as ACS, heating, ...) or transformed into electrical energy as is done in solar thermal power plants, where the HTF produces steam that drives a turbine to produce electricity. Therefore, in this case, a high absorption capacity and adequate thermal conductivity are sought so that the accumulated energy is manageable.

In the inventor's view, a family of coatings is not known that, apart from maintaining adequate thermal capacity, is capable of providing a very high or very low conductivity, emissivity or absorptivity, and which is stable over time under adverse environmental conditions according to the intended objectives.

### DESCRIPTION OF THE INVENTION

The coating of the invention, obtained by the method of the invention, can increase the thermal efficiency in emissivity or absorptivity of bases of thermal accumulator material of solid matrix, whether they are concrete-based materials or metallic supports. This coating is capable, on the one hand, to efficiently absorb large amounts of energy contained in the spectrum of 10-⁷ < λ < 10⁻⁴ m. mainly as heat, without losing its thermal resistance at high temperatures, being able to reach up to over 850°C - 900°C without loss of its thermal capacity, mechanical and durability qualities, and the other hand, it can be configured precisely to avoid capturing energy in the same spectrum of 10-⁷ < λ < 10⁻⁴ m. incident on the base protected with the coating, achieving high levels of emissivity and serving as a shield against high thermal radiation of said spectrum.

According to the invention, the method for production of the coating comprises a mixture of metal oxides applied to the base by prior dissolution in a solvent, with subsequent cooking and controlled cooling. The coating therefore is finished after cooking and cooling, or drying of the solution applied onto the base.

The mixture of metal oxides mainly comprise metal oxides which melt at a certain temperature, usually in the range between 900 and 1,300°C, and ideally for a time of between 45 minutes and 3 hours. During cooking these temperatures are reached, the metal oxides changing to the fluid state, and their viscosity being controlled by the temperature and cooking time, which allows for the coating to be applied on different bases which are of interest as a technical base, all without an excessive temperature of the developed and proposed treatments causing excessive fluidity and therefore a slippery coating which would be inappropriate for said temperature and thus functionally useless. Also the cooling or drying time is controlled, which ideally would be between 8 and 24 hours depending on the desired properties of the coating to be reached. On the other hand, the application of the solution to the base can be performed by immersing the base in the solution boiling it for several hours allowing it to penetrate through all the cracks. The number of hours will vary depending on the type of base and its porosity, coating viscosity, etc.

Therefore, regulation of absorptivity and emissivity conditions, and their effectiveness at different work temperatures is done by varying the metal oxides comprised in the mixture, the cooking temperatures, cooling time and/or through the introduction of additives that may participate in the graduation of parameters such as colour, hardness, plasticity, etc.

A parameter that influences the properties of the coating is its transparency, which depends on the ability to dissolve its constituent materials through heat, and this faculty inherent in varying degrees in all materials is implemented with the temperature and the cooking cycle: that is, the higher the temperature the more oxides dissolve giving a greater degree of transparency. Maintaining the maturation temperature or a slower cooling is also favourable.

In the transparent coatings (coloured or not) the supporting element has a large influence on the result of final colouration, principally when dealing with concrete or metals, which inherently are able to absorb and/or emit energy, which in some or in most cases can be compensated with a pre-coating to optimise the absorption and/or emission of the base. Therefore, if a higher absorptivity is preferred, high cooking temperatures and slow cooling will be used to enhance the transparency of the coating, further enhancing said absorptivity by adding additives to colour the finished transparent coating, and even more if the base comprises dark tones, whilst if a high emissivity is desired, it is preferable to use opaque coatings and/or cover the base with a white coating.

The "glossy" appearance of the coating, which also cooperates in increasing the emissivity or reflection of incident energy is affected primarily by the materials involved in its composition, for example, the Pb compounds favour the gloss more than those of boron, alumina decreases the gloss and transparency; and secondly by the temperature: a coating whose temperature has fallen short will present poor brightness and transparency, in addition to other defects such as poor spreadability, etc. Any glossy opaque coating may become dull with the addition of matting elements such as zinc oxide, titanium dioxide, etc. Similarly over-cooking or an insufficient layer of coating will detract from the opaqueness. It should be noted that oxides with matting properties also have the particularity of becoming opaque mainly at low temperature, so saturation matting also cause opaqueness of the coating.

Transparent coatings can be coloured by adding colouring oxides or natural metal oxides with colouring properties such as iron, manganese, chromium, cobalt, copper, etc., to the metal oxide mixture in proportions ideally from 0.3% to 9% in weight, depending on the colouration of the oxide itself, the temperature and the intended tonality.

In coatings made opaque, opaque making oxides such as tin oxide, zirconium oxide, cerium oxide, arsenic, alumina, etc., are involved. These opaque making oxides emit low dissolving capacity particles in the fusion. The opaqueness effect depends on the structure of the coating itself so light is reflected from the surface itself. Its proportion in the mixture will also be ideally between 0.3% to 9% by weight.

### PREFERRED MODE FOR CARRYING OUT THE INVENTION

The method for carrying out the coating of the invention comprises a mixture of metal oxides applied to a base by prior dissolution in a solvent, with subsequent cooking and controlled cooling. Cooking takes place ideally at temperatures between 900 and 1300 degrees Celsius, and for a time preferably between 45 minutes and 3 hours, depending on the base, the type of coating and the hardness and mechanical characteristics desired.

In turn, the cooling times are ideally between 8 and 24 hours for the same reasons as the cooking times. The application of the solution to the base is carried out by the immersing the base in the solution.

Therefore, the solution is prepared with a solute which is the mixture of metal oxides and solvent. When using water as the solvent, the solute ratio corresponds to between 15% and 50% of the total weight of the mixture; when the solvent is oil, the proportion thereof is between 20% and 40% of the total weight of the mixture. The average size of the metal oxide particles varies depending on the kinds of oxides used, between 5 and 500 µm.

According to preferred embodiments of the invention, these oxides must be of metals: silicon oxides, aluminum, boron, zinc, lead, iron and chromium, alkali oxides, alkaline earth oxides. Moreover, as will be described later herein, the inventor of the present application has discovered that by modifying the ratio between these oxides the modification of the material's properties can be achieved to suit its use in different temperature ranges, such as coating at low (290-590°C), medium (600-900°C) and high (900-1300°C) temperatures. Moreover, the variation of the ratio between the various oxides allows one to modify the properties of the resultant coating to suit its use at different temperatures.

For good absorptivity a low emissivity along with a high capture capacity should be sought. This situation is achieved with a situation that is based on that the coating absorbs incident rays and hinders the reflection thereof. For high emissivity the largest amount of light radiation must be reflected as possible, and only a fraction of this let pass.

Specifically, the preferred composition of the mixture of metal oxides for a high absorptivity coating compatible with refractory concretes of the HEATEK® type or on surfaces or pipes of anti-corrosion steel that withstand high temperatures (Inconel®, Haynes® ...) at temperature cycles from 50°C to 250°C, comprises:
SiO₂ > 38% by weight,
Al₂O₃ < 15% by weight,
B₂O₃ between 16% - 45% by weight,
ZnO < 12% by weight,
FeCr₂O₄ between 2% - 8% by weight,
Alkali metal oxides between 8% - 22% by weight,
Alkaline earth metal oxides < 12% by weight.

For a high absorptivity coating compatible with refractory concretes of the HEATEK® type or on surfaces or on pipes of anti-corrosion steel that withstand high temperatures (e.g. Inconel®, Haynes® ...) in temperatures cycles from 250°C to 600°C, the preferred composition of the mixture of metal oxides comprises:
SiO₂ between 35% - 63% by weight,
Al₂O₃ < 8% by weight,
B₂O₃ between 25% - 45% by weight,
ZnO < 12% by weight,
FeCr₂O₄ between 2% - 8% by weight,
Alkali metal oxides between 10% - 20% by weight,
Alkaline earth metal oxides < 10% by weight.

For a high absorptivity coating compatible with refractory concretes of the HEATEK® type or on surfaces or on pipes of anti-corrosion steel that withstand high temperatures (e.g. Inconel®, Haynes® ...) in temperatures cycles from 600°C to 1100°C, the preferred composition of the mixture of metal oxides comprises:
SiO₂ between 50% - 63% by weight,
Al₂O₃ < 7% by weight,
B₂O₃ between 25% - 47% by weight,
ZnO < 15% by weight,
FeCr₂O₄ between 2% - 9% by weight,
Alkali metal oxides between 8% - 20% by weight,
Alkaline earth metal oxides < 10% by weight.

For the three previous coatings absorptivities between 91% and 94.5% are obtained, both on accumulator concrete HEATEK^{®}Ac as on INCONEL®.

For a high emissivity coating compatible with refractory concretes of the HEATEK® Ai type or other heat insulating refractory materials in temperature cycles from 250°C to 1100°C, the preferred composition of the mixture of metal oxides would comprise:
NaO₂ between 1% - 9% by weight,
CaO between 2% - 12% by weight,
Al₂O₃ between 2% -12% by weight,
ZnO between 2% -12% by weight,
B₂O₃ between 8% - 25% by weight,
SiO₂ between 10% - 82,5% by weight,
ZrO₂ between 2% - 19% by weight,
K₂O between 0.5% - 1 % by weight.

This coating has a glossy white colour whose function, with an adequate supporting element, is the thermal protection of structures, such as avoiding the overheating of key parts in the tower receivers, as at certain times such high temperatures can be reached that damage could occur in certain operation systems of the receiver, façades, etc.

For the four particular examples of the coating of the invention described above, an optimum mechanical stability of up to at least 850°C, thermal cycling durability of more than a year and high resistance to wear and impact are obtained.

In the previous paragraphs, a "compatible" coating with a particular base means that the coating comprises a coefficient of expansion similar to the coefficient of expansion of the base. That is, within the temperatures ranges it is important that the expansion, which increases with the temperature, follows the same type of growth in both the coating and the base materials, whether metal or concrete. If there are differences in expansion between the coating and base materials it must be compensated by the plasticity of the finished coating, so as to absorb the stresses, reason for which the invention provides for the possible inclusion of plasticising additives such as water reducing plasticiser additives, which comprise components such as sodium carboxymethylcellulose, or the like.

Such plasticisers of the finished coating will be ideally included in the ratio of 0.2% and 1.5% by weight of the mixture of metal oxides before the dissolution.

If searching for a coloured transparent coating, which favours the absorptivity, the mixture of metal oxides may comprise colouring oxides and/or natural iron, manganese, chromium, cobalt and/or copper oxides in proportion comprised between 0.3% and 9% by weight of the total mixture before dissolution.

For opaque made coatings, the mixture of metal oxides ideally comprises colourant oxides and/or natural tin oxides, zirconium oxide, cerium oxide, arsenic and/or alumina, in a ratio from 0.3% to 9% by weight of the mixture before dissolution. All this depends on the base composition of the coating.

To try to solve some problems of adhesion that may occur between the coating and the bases, binder additives can be used such as sodium carboxymethylcellulose. These binders are in the range between 0.2 and 0.7% by weight of the mixture of metal oxides before the dissolution.

To improve hardness, hardener additives such as Colemanite solutions or Borax can be used, which should be tested beforehand to verify that there is no incompatibility with the base or with the components of the coating.

The coating of the invention, according to the variants described, is extremely useful in applications such as thermal solar collectors of solar thermal power plant towers, thermal collectors for energy recovery systems and for thermal collectors of heliostats. As mentioned, the main field of application is related to power generation, and in particular is especially suitable for the construction of thermal solar collectors in solar thermal power plants, energy recovery systems in industry, etc.

## Claims

1. A method for making a coating for bases under the incidence of energy in the wavelength spectrum of 10⁻⁷< λ <10⁻⁴ m. **characterised in that** it comprises applying a mixture of metal oxides on the base by prior dissolution in a solvent, with subsequent cooking and controlled cooling.

2. The method for making a coating for bases under the incidence of energy in the wavelength spectrum of 10⁻⁷ < λ < 10⁻⁴ m., according to Claim 1, **characterised in that** the cooking is conducted at temperatures between 900 and 1300 degrees centigrade.

3. The method for making a coating for bases under the incidence of energy in the wavelength spectrum of 10-⁷ < λ < 10⁻⁴ m., according to any preceding claim **characterised in that** the cooking is done for a time of between 45 minutes and 3 hours.

4. The method for making a coating for bases under the incidence of energy in the wavelength spectrum of 10-⁷ < λ < 10⁻⁴ m., according to any preceding claim, **characterised in that** the cooling times are between 8 and 24 hours.

5. The method for making a coating for bases under the incidence of energy in the wavelength spectrum of 10-⁷ < λ < 10⁻⁴ m., according to any preceding claim, **characterised in that** the solution comprises a water-based solvent, the solute being in a proportion comprised between 15% and 50% by weight.

6. The method for making a coating for bases under the incidence of energy in the wavelength spectrum of 10-⁷ < λ < 10⁻⁴ m., according to any of Claims 1 to 4, **characterised in that** the solution comprises an oil-based solvent, the solute being in a proportion comprised between 20% and 40% by weight.

7. The method for making a coating for bases under the incidence of energy in the wavelength spectrum of 10-⁷ < λ < 10⁻⁴ m., according to any preceding claim, **characterised in that** the constituent metal oxide mixture of the solute comprises particles of an average size of between 5 and 500 µm.

8. The method for making a coating for bases under the incidence of energy in the wavelength spectrum of 10⁻⁷ < λ < 10⁻⁴ m., according to any preceding claim, **characterised in that** the application of the solution to the base is performed with immersion of the base in the solution, and leaving it to boil.

9. The method for making a coating for bases under the incidence of energy in the wavelength spectrum of 10-⁷ < λ < 10⁻⁴ m., according to any preceding claim, **characterised in that** the mixture of metal oxides constituting the solute comprises:
silicon oxides,
aluminium oxides,
boron oxides,
zinc oxides,
lead oxides,
iron oxides,
chromium oxides,
alkali metal oxides, and/or
alkaline earth metal oxides,

10. The method for making a coating for bases under the incidence of energy in the wavelength spectrum of 10-⁷ < λ < 10⁻⁴ m., according to any preceding claim, **characterised in that** the constituent metal oxide mixture of the solute for a coating of high absorptivity applicable to bases that withstand temperature cycles of between 50 and 250 degrees centigrade comprises:
SiO₂ > 38% by weight,
Al₂O₃ < 15% by weight,
B₂O₃ between 16% - 45% by weight,
ZnO < 12% by weight,
FeCr₂O₄ between 2% - 8% by weight,
Alkali metal oxides between 8% - 22% by weight,
Alkaline earth metal oxides < 12% by weight.

11. The method for making a coating for bases under the incidence of energy in the wavelength spectrum of 10-⁷ < λ < 10⁻⁴ m., according to any of Claims 1 to 9, **characterised in that** the constituent metal oxide mixture of the solute for a coating of high absorptivity applicable to bases that withstand temperatures between 250 and 600 degrees centigrade comprises:
SiO₂ between 35% - 63% by weight,
Al₂O₃ < 8% by weight,
B₂O₃ between 25% - 45% by weight,
ZnO < 12% by weight,
FeCr₂O₄ between 2% - 8% by weight,
Alkali metal oxides between 10% - 20% by weight,
Alkaline earth metal oxides < 10% by weight.

12. The method for making a coating for bases under the incidence of energy in the wavelength spectrum of 10-7 < λ < 10-4 m., according to any of Claims 1 to 9, **characterised in that** the constituent metal oxide mixture of the solute for a coating of high absorptivity applicable to bases that withstand temperatures between 600 and 1100 degrees centigrade comprises:
SiO₂ between 50% - 63% by weight,
Al₂O₃ < 7% by weight,
B₂O₃ between 25% - 47% by weight,
ZnO < 15% by weight,
FeCr₂O₄ between 2% - 9% by weight,
Alkali metal oxides between 8% - 20% by weight,
Alkaline earth metal oxides < 10% by weight.

13. The method for making a coating for bases under the incidence of energy in the in the wavelength spectrum of 10⁻⁷ < λ < 10⁻⁴ m., according to any of Claims 1 to 9, **characterised in that** the constituent metal oxide mixture of the solute for a coating of high emissivity applied to bases that withstand temperatures cycles between 250 and 1100 degrees centigrade comprises:
NaO₂ between 1% - 9% by weight,
CaO between 2% - 12% by weight,
Al₂O₃ between 2% -12% by weight,
ZnO between 2% -12% by weight,
B₂O₃ between 8% - 25% by weight,
SiO₂ between 10% - 82.5% by weight,
ZrO₂ between 2% - 19% by weight,
K₂O between 0.5% - 1 % by weight.

14. The method for making a coating for bases under the incidence of energy in the wavelength spectrum of 10-⁷ < λ < 10⁻⁴ m., according to any preceding claim, **characterised in that** it comprises adding plastifying additives on the finished coating in the ratio of between 0.2% to 1.5% by weight of the metal oxides mixture before dissolution.

15. The method for making a coating for bases under the incidence of energy in the wavelength spectrum of 10⁻⁷ < λ < 10⁻⁴ m., according to Claim 14, **characterised in that** the plasticiser additives include water reducing plasticisers.

16. The method for making a coating for bases under the incidence of energy in the wavelength spectrum of 10-⁷ < λ < 10⁻⁴ m., according to Claim 15, **characterised in that** the water reducing plasticiser additives comprise components such as sodium carboxymethylcellulose, or the like.

17. The method for making a coating for bases under the incidence of energy in the wavelength spectrum of 10⁻⁷ < λ < 10⁻⁴ m., according to any preceding claims, **characterised in that** the metal oxide mixture comprises oxide colourants and/or natural iron, manganese, chromium, cobalt and/or copper oxides of a ratio of between 0.3% and 9% by weight of the total mixture before dilution, usable in coloured transparent coatings.

18. The method for making a coating for bases under the incidence of energy in the wavelength spectrum of 10-⁷ < λ < 10⁻⁴ m., according to any of Claims 1 to 16, **characterised in that** the metal oxide mixture comprises oxide colourants and/or natural tin oxides, zirconium oxide, cerium oxide, arsenic and/or alumina in the ratio of between 0.3% and 9% by total weight of the mixture before diluting, usable in coatings made opaque.

19. The method for making a coating for bases under the incidence of energy in the wavelength spectrum of 10⁻⁷ < λ < 10⁻⁴ m., according to any preceding claim, **characterised in that** it comprises the addition of binder additives in a ratio comprised between 0.2 and 0.7% by weight of the metal oxide mixture before dissolution.

20. The method for making a coating for bases under the incidence of energy in the wavelength spectrum of 10-⁷ < λ < 10⁻⁴ m., according to Claim 19, **characterised in that** the binders additives comprise sodium carboxymethylcellulose.

21. The coating for bases under the incidence of energy in the wavelength spectrum of 10-⁷ < λ < 10⁻⁴ m., **characterised in that** it is obtained by the above method.
